# EUROPEAN PATENT SPECIFICATION

(11) **EP 1 953 955 B1**
(45) Date of publication and mention of the grant of the patent: **09.11.2016**
(21) Application number: 05814647.3
(22) Date of filing: 24.11.2005
(51) Int. Cl.: H04L 12/721, H04L 12/707, H04L 12/761, H04L 12/703, H04L 12/711, H04Q 11/00, H04L 12/18

(54) **PROTECTION RESTORATION METHOD FOR MULTICAST SERVICE CONNECTION IN THE AUTOMATIC SWITCHED OPTICAL NETWORK**
SCHUTZRESTAURATIONSVERFAHREN FÜR EINE MULTICAST-DIENSTVERBINDUNG IN EINEM AUTOMATISCHEN VERMITTELTEN OPTISCHEN NETZ
PROCÉDÉ DE RÉTABLISSEMENT DE PROTECTION POUR CONNEXION DE SERVICE MULTIDIFFUION DANS UN RÉSEAU OPTIQUE À COMMUTATION AUTOMATIQUE

(43) Date of publication of application: 06.08.2008
(73) Proprietor: ZTE Corporation, Guangdong 518057 (CN)
(72) Inventor: SUN, Desheng, Shenzhen, Guangdong 518057 (CN)
(74) Representative: Cabinet Laurent & Charras
(86) International application number: PCT/CN2005/001983
(87) International publication number: WO 2007/059646

(56) References cited:
- WO-A1-02/03704
- WO-A1-2005/036818
- WO-A1-2005/104421
- CN-A- 1 606 277
- KR-A- 20040 057 868
- US-A1- 2003 149 792

## Description

### FIELD OF THE INVENTION

The present invention relates to an optical network, more particularly to a method for protecting and restoring a connection of multicast service in the automatic switched optical network.

The optical network, such as OTN (Optical Transmission Network), WDM (Wavelength-Division Multiplexing), SDH (Synchronous Digital Hierarchy) or SONET (Synchronous Optical Network) is widely used in the telecommunication field.

Currently, automatic switched optical network (ASON) is the research focus in optical network field. The ASON concept is proposed in ITU-T G.8080, in which the function of the ASON network is implemented by Control Plane (CP) set up specially. The implementing skeleton of distributed call and connection in the ASON network is specified in ITU-T G.7713, to provide implementing specification for setting up, modifying and deleting call and connection automatically.

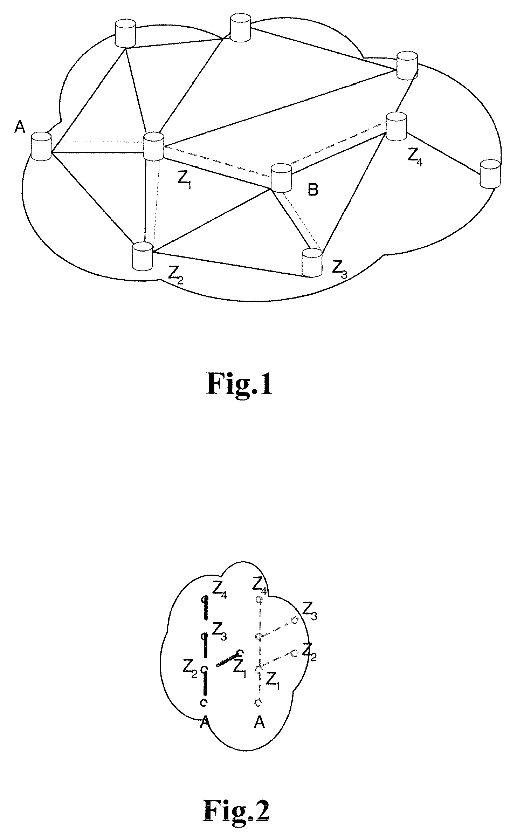

Now the requirement for multicast service is promoted by the fast increasing internet service, and the multicast technique is widely used in the data network, such as broadcast TV and so on. As shown in fig 1, the multicast service only relates to one service sender and a plurality of service receivers, for example, the sender A and the receiver Z1, Z2, Z3 and Z4 in fig 1. The multicast technique with a set of appropriate protection and restoration policy is widely used in the packet based network. But it is difficult to implement multicast service and its protection and restoration in the circuit or wave based optical network. Recently although the multicast technique is identified as implement requirement by ASON, further studies are still required.

WO 2008/127372 A1 provides system and method for fault tolerant stream splitting. The method comprises: monitoring a primary root splitter to ensure that the primary root splitter is operating within predefined parameters, the primary root splitter to split a single data stream into multiple data streams transmitted to multiple leaf splitters; and reassigning one of the leaf splitters as a new primary root splitter responsive to detecting that the primary root splitter is not operating within the predefined parameters.

US 2003/0149792 A1 provides system and method for better bandwidth utilization in a network system, comprising a proxy, a server and a client. The proxy receives a data stream from the server, splits it into multiple data streams and transmits them to the client. The clients merges the multiple data streams into one stream.

WO 2005/104421 A1 provides a method, system, device, and computer code product in which a sender transmits data to a plurality of receivers via a point-to-multipoint session. The receiver sends data repair requests to the sender requesting data expected but not received and the sender retransmits the expected but not received data via the point-to-multipoint session. The sender can also schedule point-to-point data repair sessions with individual receivers if the retransmission via the point-to-multipoint session does not correct all errors.

### SUMMARY OF THE INVENTION

There is not an implementing scheme of protection and restoration of connection of multicast service in the automatic switched optical network, and the object of the present invention is to provide a protection and restoration method for connection of multicast service in the automatic switched optical network to simply and reliably achieve the protection and restoration of the connection of multicast service in the ASON.

The features of the method according to the present invention are defined in the independent claim, and the preferable features according to the present invention are defined in the dependent claims.

The protection and restoration method according to the present invention splits the protection and restoration of connection in the point to multipoint multicast service into protection and restoration of a plurality of point to point connections between the sender and the multiple receivers according to the frame structure of the automatic switched optical network. wherein, the method splits the protection of a complicated multicast service to setting up redundancy protection for a plurality of point to point connections, and splits the restoration of a complicated multicast service to only restoring failed related connection according to point to point connection, therefore the protection and restoration method of connection for the automatic switched optical network according to the present invention has the advantage of conciseness and reliability.
FIG. 1 is a diagram of ASON network supporting multicast service;
FIG. 2 is a tree diagram of redundancy protection of multicast service in the ASON network;
FIG. 3 is a network diagram of redundancy protection of multicast service in the ASON network;
FIG. 4 is a tree diagram of connection restoration in the ASON network, wherein the fault is at the tip of connection tree of the multicast;
FIG 5 is a network diagram of connection restoration in the ASON network, wherein the fault is at the tip of the connection tree of the multicast;
FIG 6 is a tree diagram of connection restoration in the ASON network, wherein the fault is at the trunk of the connection tree of the multicast;
FIG 7 is a network diagram of connection restoration in the ASON network, wherein the fault is at the trunk of the connection tree of the multicast.

The protection and restoration method for connection of multicast service in the automatic switched optical network according to the present invention splits the protection and restoration of connection in the point to multipoint multicast service into protection and restoration of a plurality of point to point connections between the sender and the multiple receivers according to the frame structure of the automatic switched optical network.

The present invention is divided into two aspects: setting up redundancy protection to protect the multicast service, and restoring the connection of multicast service, both of which will be described in details.

The protection method of the present invention sets up a plurality of point to point connection according to the frame structure of ASON to protect the connection of multicast service in the ASON.

The restoration method of the present invention restores connection of the multicast service by restoring point to point connection between service sender and failed service receiver.

The protection method of connection in the multicast service comprises the following steps:
Step S11: a Connection Controller (CC) in the portal of the network boundary detects request for setting up redundancy protection for multicast service from user (if call is supported, the CC detects whether multicast service request from a Network Call Controller (NCC) in the portal of the network boundary is received or not), if received, go the next step, otherwise wait;
Step: S12: the CC in the portal of the network boundary queries the sender and all receivers of current multicast service and the connection route of the current multicast according to said request for setting up redundancy protection for multicast service, and creates a route query request (service type of which is identified as multicast) for setting up a new multicast connection according to the query result and the restoration policy (including policy of being different from the original path, the shortest path, least path hops, lowest overhead and so on) and send said route query request to the routing controller (RC), the service type of which is identified as multicast;
Step S13: the RC queries Routing Database (RDB) according to the route query request for setting up a new multicast connection and the rule of sharing connection source as much as possible and the entered restoration policy, if a tree route result is attained, the result is returned to the CC in the portal of the network boundary and goes to Step S14, otherwise a failure response is returned to the CC and goes to Step S 15;
Step S14: the CC in the portal of the network boundary splits the connection between one sender and multiple receivers into a plurality of point to point connections between one sender and one receiver according to the route result and start the process of setting up each point to point connection and goes to Step S16, wherein multicast property is added to these new point to point connections to be distinguished from ordinary point to point connection;
Step S 15: the CC returns failure information to inform the user that setting up the redundancy protection of the multicast service failed and returns to Step S11;
Step S16: the CC in the portal of the network boundary checks the progress of setting up a plurality of point to point connections in Step S14, and return failure information indicating that the redundancy protection of multicast service not being set up to the user and delete all the created point to point connections and return to the Step S11 if setting up of any connection failed, and return success information indicating that the redundancy protection of multicast service being successfully set up to the user if all point to point connections are set up successfully in Step S14.

The restoration method for connection of the multicast service comprises the following steps:
Step S21: the CC in the portal of the network boundary detects fault notification from all service receivers of the multicast service, if the fault notification is received, goes to Step 22, otherwise wait;
Step S22: the CC in the portal of the network boundary creates route query request with the service sender and service receiver sending the fault notification as restoration unit according to the fault notification and combining the recovery policy, and sends the route query request to the RC;
Step S23: the RC queries the routing database according to the route query request to attain a point to point connection route between the service sender and the service receiver of Step S22, if succeed, go to the Step S24, otherwise sends failure information to the CC and goes to Step S25;
Step S24: the CC convert the fault restoration of multicast connection into setting up a new point to point connection between the service sender and service receiver of Step S22, starts the process of the setting up said new point to point connection and then go to Step S26;
Step S25 CC return failure information indicating that the related service receiver of the multicast service can not receive service normally to the user and return to the step S21;
Step S26: the CC in the portal of the network boundary checks the progress of setting up new point to point connection between the service sender and the service receiver sending the fault notification according to the attained point to point connection route, return failure information to inform the user that the related service receiver of the multicast service can not receive service normally and return to the Step S21 if setting up of any connection failed, otherwise return success information to inform the user that the service receiver sending the fault notification has recovered successfully.

The restoration of a plurality of failed connections can be achieved by repeating the above-mentioned steps.

The method for returning the multicast service to the original multicast connection after the connection being restored according to the present invention comprises the following steps:
Step S31: the CC in the portal of the network boundary detects notification indicating that the fault being eliminated from all the multicast service receivers, if said notification is received, goes to Step S32, otherwise wait;
Step S32: the CC in the portal of the network boundary locates the related restoration connection according to the service sender and the service receiver sending the notification indicating that the fault being eliminated, and determines whether to start the delay timer or not according to the restoration policy, if not, goes to Step S34, otherwise start the delay timer and goes to Step S33;
Step S33: if the CC receives fault notification from the service receiver again when the timer is counting, goes to Step S31; otherwise, goes to the Step S34;
Step S34: the CC locates the related restoration connection according to the service sender and the service receiver of Step S32 and starts the process of deleting said restoration connection between the service sender and service receiver and goes to Step S335;
Step S35: the CC in the portal of the network boundary checks the progress of deleting the restoration connection of Step S34, if failure is returned, the connection controller in the portal of the network boundary returns information to inform the user that the related multicast service receiver failed to return; otherwise, the multicast service returns to the original multicast connection successfully.

The method according to the present invention will be described in details with reference to the preferred embodiment and accompany drawings.

As shown in fig 1, Given that the original multicast service is the following case: network element A is the service sender, and Z1, Z2, Z3 and Z4 are service receivers.

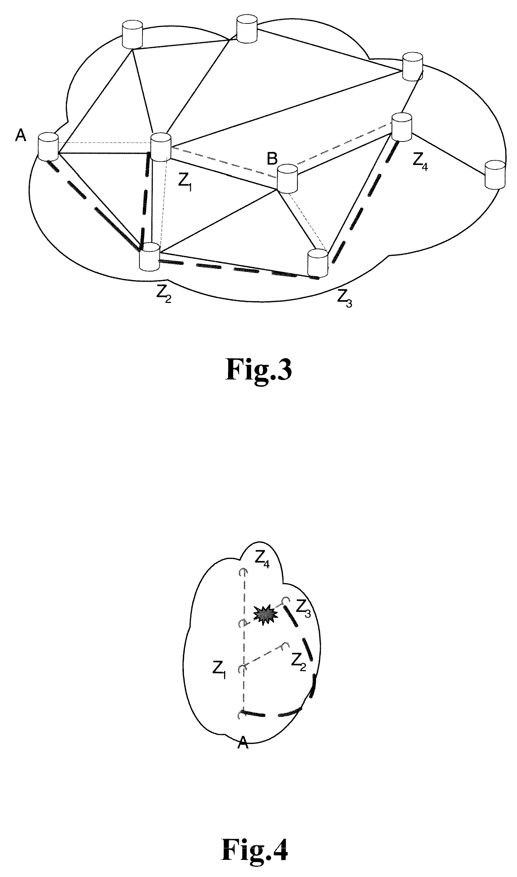

Referring to Fig 1, 2 and 3, the protection method for connection of multicast service according to the present invention is as following:
Step S101: the Connection Controller (hereinafter referred as CC_{A}) in the portal of the network boundary node A detects request for setting up redundancy protection for multicast service from a user, if the CC_{A} receives the request for setting up redundancy protection for original multicast service A→Z1, Z2, Z3 and Z4, goes to Step S102;
Step S102: CC_{A} queries the component and route of the connection of the original multicast service A→Z1, Z2, Z3 and Z4 according to the request for setting up the redundancy protection, and creates a route query request (service type of which is identified as multicast) for setting up new multicast connection according to the query result and restoration policy, and sends said route query request to RC, then goes to Step S103;
Step S103: the RC queries RDB according to the route query request for setting up a new multicast connection and the rule of sharing connection source as much as possible and the entered restoration policy, if a tree route result as shown by thick dashed line in Fig.2 is attained, return the route result to the CC_{A} and go to Step S104; otherwise a failure response is returned to the CC_{A} and goes to Step S105;
Step S104: according to the routing result illustrated in Fig.2, CC_{A} splits the connection between sender A and receivers Z1, Z2, Z3 and Z4 to four point to point connection A → Z1, A → Z2, A → Z3 and A → Z4, and initiates the process of sequentially setting A → Z1, A → Z2, A → Z3 and A → Z4, then goes to Step 106, wherein multicast property is added to these new point to point connections to be distinguished from ordinary point to point connection;
Step S105: the CC_{A} returns failure information to inform the user that setting up the redundancy protection of the multicast service failed, and return to the Step 101;
Step S106: the CC_{A} checks the progress of setting up A → Z1, A → Z2, A → Z3 and A → Z4 in Step S104, and return failure information indicating that the redundancy protection of multicast service not being set up to the user and delete all the created point to point connections and return to the Step S101 if setting up of any connection failed, and return success information if A → Z1, A → Z2, A → Z3 and A → Z4 are set up successfully, as shown in Fig.3 (wherein the network for redundancy protection is shown by thick dashed lines).

Referring to Fig. 1, 4 and 5, the restoration method for the connection of the multicast service according to the present will be described in the example of B and Z3 failed in the above-mentioned multicast service A and Z1, Z2, Z3, Z4.

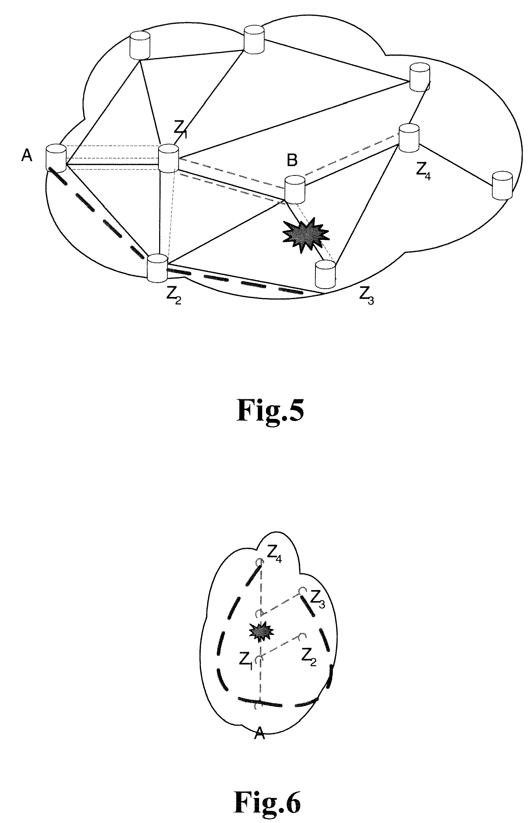

The restoration method for connection of multicast service according to the present invention is as following:
Step S201: the CC_{A} in the portal of the network boundary node A receives the fault notification from Z3 while detecting fault notification from multicast service receivers Z1, Z2, Z3, Z4 as shown in figure 1,and goes to Step S202;
Step S202: the CC_{A} creates route query request with A and Z3 as a restoration unit according to the received fault notification information and combining the restoration policy, and sends the route query request to RC;
Step S203: the RC queries the RDB according to the route query request and restoration policy to attain a point to point route connection between A and Z3, if succeed, the corresponding point to point route connection is attained, and goes to Step S204, otherwise, return failure information to CC_{A} and goes to Step S205;
Step S204: CC_{A} converts the restoration of the multicast service A → Z1, Z2, Z3 and Z4 to setting up a new point to point connection between A and Z3, and initiates the setting up process, and goes to Step S206;
Step S205: CC_{A} return failure information indicating that the related service receiver of the multicast service can not receive service normally to the user and return to the Step S201;
Step S206: CC_{A} checks the progress of setting up new connection A → Z3, if failed, CC_{A} return failure information to inform the user that the service receiver Z3 of the multicast service A → Z1, Z2, Z3 and Z4 can not receive service normally and return to the Step 201; otherwise CC_{A} returns success information to inform the user that the service receiver Z3 of the multicast service A → Z1, Z2, Z3 and Z4 has recovered successfully. The restored connection is shown by thick dashed line in Fig.4 and 5.

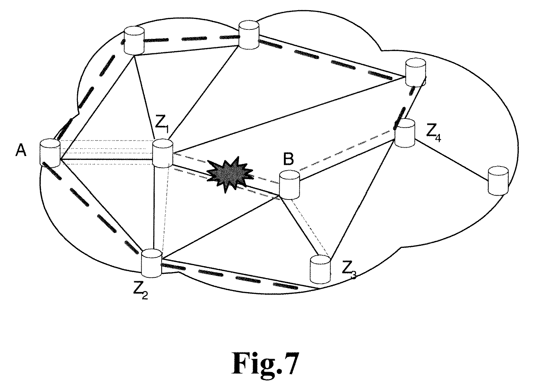

When the fault is at the trunk of the connection of the multicast service as shown in Fig.6 and 7, the above-mentioned steps should the repeated to restore the service of a plurality of failed receivers.

Referring to Fig. 1, 4 and 5, the implement method for returning the multicast service A → Z1, Z2, Z3 and Z4 to the original multicast connection after the failed B and Z3 being restored and the fault being eliminated comprises the following steps:
Step S301: CC_{A} in the portal of the network boundary node A receives a notification indicating that the fault being eliminated from Z3 while detecting notification indicating that the fault being eliminated from the multicast service receivers Z1, Z2, Z3 and Z4 as shown in Fig.1, and goes to Step S302;
Step S302: CC_{A} locates the related restoration connection A → Z3 as shown by the thick dashed line in Fig.4 and 5, and determines whether to start the delay timer or not according to the restoration policy, if not, goes to Step S 304, otherwise the CC_{A} starts the delay timer and goes to Step S303;
Step S303: if the CC_{A} receives fault notification from the service receiver Z3 again when the delay timer is counting, goes to Step S301; otherwise, goes to Step S304;
Step S304: CC_{A} starts the process of deleting connection A → Z3, then goes to Step S305;
Step S305: CC_{A} checks the progress of deleting connection A → Z3, if failure is returned, CC_{A} returns related information to inform the user that multicast service receiver Z3 failed to return; otherwise the multicast service returns to the original multicast connection successfully, as shown by dashed line in Fig.1.

It will be apparent to those skilled in the art that various modifications and variation can be made in the present invention. Thus, it is intended that the present invention cover the modifications and variations of this invention provided they come within the scope of the appended claims.

### Industry Application

The protection and restoration method according to the present invention splits the protection and restoration of connection in the point to multipoint multicast service into protection and restoration of a plurality of point to point connections between the sender and the multiple receivers according to the frame structure of the automatic switched optical network. wherein, the method splits the protection of a complicated multicast service to setting up redundancy protection for a plurality of point to point connections, and splits the restoration of a complicated multicast service to only restoring failed service receiver according to point to point connection, therefore the protection and restoration method of connection for the automatic switched optical network according to the present invention has the advantage of conciseness and reliability

## Claims

1. A method for protecting and restoring connection of multicast service in an automatic switched optical network, the method comprises,
splitting the connection of a point-to-multipoint multicast service into a plurality of new point-to-point connections between the sender and multiple receivers according to a frame structure of the automatic switched optical network;
implementing protection and restoration operation of the connection of multicast service in the automatic switched optical network according to said point-to-point connection, **characterized in that** implementing protection operation of the connection of multicast service in the automatic switched optical network comprises,
detecting a request for setting up redundancy protection for multicast service sent by a user by the connection controller in the portal of the network boundary;
querying a sender, all receivers and connection route of current multicast service according to the request for setting up redundancy protection for multicast service by the connection controller, creating a route query request for setting up a new multicast connection according to the queried result of the sender, all receivers and connection route of the current multicast service and a restoration policy, and sending the route query request for setting up the new multicast connection to the routing controller, wherein service type of the route query request for setting up the new multicast connection is identified as multicast;
attaining a routing result by querying a routing database according to the route query request for setting up the new multicast connection by the routing controller and sending the routing result back to the connection controller in the portal of the network boundary, and
respectively setting up the point-to-point connections between the sender and each of the receivers according to the queried routing result by the connection controller in the portal of the network boundary, wherein the point-to-point connections distinguish from an ordinary point-to-point connection by adding multicast property.

2. The method as claimed in claim 1, **characterized in that** implementing protection operation of the connection of multicast service in the automatic switched optical network further comprises
checking the progress for setting up the point-to-point connections by the connection controller in the portal of the network boundary;
returning failure information to the user and deleting all the created point-to-point connections and go to the step of detecting request for setting up redundancy protection for multicast service from a user if setting up of anyone of the point-to-point connections is failed, and
returning success information to the user if all of the point-to-point connections are set up successfully.

3. The method as claimed in claim 2, **characterized in that** implementing protection operation of the connection of multicast service in the automatic switched optical network further comprises
returning failure information to the connection controller in the portal of the network boundary if the step of attaining the routing result from the routing controller by querying a routing database according to the route query request for setting up a new multicast connection fails, and
returning the failure information to the user by the connection controller.

4. The method as claimed in claim 1, **characterized in that** the step of implementing restoration operation of connection of the multicast service in the automatic switched optical network comprises
respectively setting up point-to-point connection between the sender and at least one receiver which cannot receive service from sender for the original connection fault by the connection controller in the portal of the network boundary so as to restore the broken service.

5. The method as claimed in claim 4, **characterized in that** the step of implementing restoration operation of connection of the multicast service in the automatic switched optical network comprises,
detecting a fault notification from all service receivers of the multicast service by the connection controller in the portal of the network boundary;
creating the route query request with respect to the sender and the receiver sending the fault notification by the connection controller in the portal of the network boundary using the fault notification and the recovery policy, and sending the route query request to the routing controller;
searching a route of a point-to-point connection between the sender and one of the receivers of the service by the routing controller through querying the routing database according to the route query request;
setting up a new connection between the sender and the receiver which can not receive service from sender for the original connection fault according to the searched route of the point-to-point connection by the connection controller in the portal of the network boundary.

6. The method as claimed in claim 5, **characterized in that** the method further comprises
checking the progress for setting up the new connection between the sender and the receiver which can not receive service from sender for the original connection fault by the connection controller in the portal of the network boundary;
returning failure information to inform the user that the related receiver of the multicast service can not receive a service normally if the setting up of the new connection between the sender and the said receiver sending the fault notification is failed;
returning success information to inform the user that the said receiver has recovered successfully if the new connection between the sender and the said receiver is set up successfully..

7. The method as claimed in claim 5, **characterized in that**, if the step of searching the route of the point-to-point connection between the sender and one of the receivers which can not receive service from sender for the original connections fault is failed, sending the failure information to the connection controller in the portal of the network boundary by the routing controller, and further returning the failure information to inform the user that the receiver of the related service can not receive a service normally by the connection controller in the portal of the network boundary.

8. The method as claimed in anyone of claims 4, 5, 6 and 7, **characterized in that** the method comprises deleting the new point-to-point connection between the sender and the receiver which can not receive service from sender for the original connections fault, and returning the multicast service to the original multicast connection by the connection controller in the portal of the network boundary after the fault of the receiver is eliminated.

9. The method as claimed in claim 8, **characterized in that** the step of deleting the new point-to-point connection and returning the multicast service to the original multicast connection comprises
detecting notification indicating that the fault being eliminated from all the multicast service receivers by the connection controller in the portal of the network boundary;
locating the related restoration connection according to the sender and the receiver sending the notification indicating that the fault being eliminated by the connection controller in the portal of the network boundary;
deleting the restoration connection.

10. The method as claimed in claim 9, **characterized in that** it further comprises:
checking the progress of deleting the restoration connection by the connection controller in the portal of the network boundary;
the connection controller in the portal of the network boundary returning information to inform the user that the related multicast service receiver failed to return if the operation of deleting is failed, otherwise, the multicast service is returned to the original multicast connection.

11. The method as claimed in claim 9, **characterized in that** the step of locating the related restoration connection further comprises
starting a delay timer for restoration after the related restoration connection is located, wherein the step of detecting notification indicating that the fault being eliminated from all the multicast service receivers is implemented if the connection controller in the portal of the network boundary receives fault notification from the service receiver again within a timing period of the timer, otherwise, the step of starting the process of deleting the restoration connection is implemented.

## Patentansprüche

1. Verfahren zum Schutz und zur Retablierung eines Anschlusses von Multicast-Services in einem optischen, automatisch geschalteten Netzwerk, wo das Verfahren folgendes umfasst:
- Aufspaltung des Anschlusses eines Punkt-zu-Mehrpunkt Multicast-Services in eine Vielzahl an neuen Punkt-zu-Punkt-Anschlüssen zwischen dem Sender und multiplen Empfängern gemäß einer Rahmenstruktur des optischen, automatisch geschalteten Netzwerks;
- Durchführung der Schutz- und Retablierungsfunktion des Anschlusses eines Multicast-Services in dem optischen, automatisch geschalteten Netzwerk gemäß dem Punkt-zu-Punkt-Anschluss, **dadurch gekennzeichnet, dass** die Durchführung der Schutzfunktion des Anschlusses des Multicast-Services im optischen, automatisch geschalteten Netzwerk folgendes umfasst:
o Erfassung eines Antrags zum Aufbau eines Redundanzschutzes des von einem Nutzer gesendeten Multicast-Services durch den Anschlusskontroller im Portal der Netzwerkgrenze;
o Abfrage eines Senders, aller Empfänger und einer Anschlussroute des aktuellen Multicast-Services gemäß Antrag auf Aufbau des Redundanzschutzes für den Multicast-Service durch den Anschlusskontroller, Schaffung eines Routenabfrage-Antrags zum Aufbau einer neuen Multicast-Verbindung gemäß dem abgefragten Ergebnis des Senders, aller Empfänger und der Anschlussroute des aktuellen Multicast-Services und einer Retablierungspolitik, sowie Senden des Routenabfrage-Antrags zum Aufbau der neuen Multicast-Verbindung an den Routenkontroller, wobei der Servicetyp des Routenabfrage-Antrags zum Aufbau der neuen Multicast-Verbindung als Multicast identifiziert wird;
o Erreichen eines Routenergebnisses durch Befragung einer Routendatenbank gemäß dem Routenabfrage-Antrag zum Aufbau der neuen Multicast-Verbindung durch den Routenkontroller und Zurücksenden des Routenergebnisses an den Verbindungskontroller im Portal der Netzwerkgrenze, und
o jeweiligen Aufbau der Punkt-zu-Punkt-Anschlüsse zwischen dem Sender und jedem der Empfänger gemäß dem abgefragten Routenergebnis durch den Verbindungskontroller im Portal der Netzwerkgrenze, wobei sich die Punkt-zu-Punkt-Verbindungen von einer gewöhnlichen Punkt-zu-Punkt-Verbindung durch Hinzufügen von Multicast-Eigenschaften unterscheiden.

2. Verfahren gemäß Anspruch 1, **dadurch gekennzeichnet, dass** die Durchführung der Schutzfunktion der Verbindung des Multicast-Services im optischen, automatisch geschalteten Netzwerk darüber hinaus noch folgendes umfasst:
- Prüfung des Fortschritts in dem Aufbau der Punkt-zu-Punkt-Verbindungen durch den Verbindungskontroller im Portal der Netzwerkgrenze;
- Rücksendung von Fehlermeldungen an den Nutzer und Löschen aller geschaffenen Punkt-zu-Punkt-Verbindungen und Rücksetzung auf den Schritt der Erfassung des Antrags auf Redundanzschutz für Multicast-Services seitens eines Nutzers, wenn der Aufbau einer Punkt-zu-Punkt-Verbindung fehlgeschlagen ist, und
- Rücksendung von Erfolgsmeldungen an den Nutzer, wenn alle Punkt-zu-Punkt-Verbindung erfolgreich aufgebaut worden sind.

3. Verfahren gemäß Anspruch 2, **dadurch gekennzeichnet, dass** die Durchführung der Schutzfunktion der Verbindung des Multicast-Services im automatisch geschalteten Netzwerk darüber hinaus noch folgendes umfasst:
- Rücksendung der Fehlermeldung an den Verbindungskontroller im Portal der Netzwerkgrenze, wenn der Schritt der Erzielung des Routenergebnisses seitens des Routenkontrollers durch Abfrage einer Routendatenbank gemäß des Routenabfrageantrags zum Aufbau einer neuen Multicast-Verbindung fehlschlägt, und
- Rücksendung der Fehlermeldung durch den Verbindungskontroller an den Nutzer.

4. Verfahren gemäß Anspruch 1, **dadurch gekennzeichnet, dass** der Schritt der Durchführung der Retablierungsfunktion der Verbindung des Multicast-Services im optischen, automatisch geschalteten Netzwerk darüber hinaus noch folgendes umfasst:
- den jeweiligen Aufbau einer Punkt-zu-Punkt-Verbindung zwischen dem Sender und mindestens einem Empfänger, der aufgrund des Ursprungsanschlussfehlers des Verbindungskontrollers im Portal der Netzwerkgrenze den Service vom Sender nicht empfangen kann, um den unterbrochenen Service wieder zu retablieren.

5. Verfahren gemäß Anspruch 4, **dadurch gekennzeichnet, dass** der Schritt der Durchführung der Retablierungsfunktion der Verbindung des Multicast-Services im optischen, automatisch geschalteten Netzwerk darüber hinaus noch folgendes umfasst:
- Erfassung einer Fehlerbenachrichtigung aller Service-Empfänger des Multicast-Services durch den Verbindungskontroller im Portal der Netzwerkgrenze;
- Erstellung des Routenabfragungsantrag in Bezug auf den Sender und wo der Empfänger die Fehlerbenachrichtigung durch den Verbindungskontroller im Portal der Netzwerkgrenze unter Verwendung der Fehlerbenachrichtigung und der Retablierungspolitik sendet und den Routenabfragungsantrag an den Routenkontroller sendet;
- Suchen einer Route von Punkt-zu-Punkt-Verbindungen zwischen dem Sender und einem der Empfänger des Services durch den Routenkontroller, indem er die Routendatenbank gemäß Routenabfragungsantrag abfragt;
- Aufbau einer neuen Verbindung zwischen dem Sender und dem Empfänger, welcher den Service vom Sender aufgrund eines Fehlers der Originalverbindung nicht empfangen kann, und zwar gemäß der vom Verbindungskontroller im Portal der Netzwerkgrenze gesuchten Route für die Punkt-zu-Punkt-Verbindung.

6. Verfahren gemäß Anspruch 5, **dadurch gekennzeichnet, dass** das Verfahren außerdem noch folgendes umfasst:
- Überprüfung des Fortschritts in dem Aufbau einer neuen Verbindung zwischen dem Sender und dem Empfänger, welcher den Service vom Sender aufgrund eines Fehlers der Originalverbindung seitens des Verbindungskontrollers im Portal der Netzwerkgrenze nicht empfangen kann;
- Rücksendung der Fehlerinformationen, um den Nutzer darüber zu informieren, dass der entsprechende Empfänger des Multicast-Services den Service nicht normal empfangen kann, wenn der Aufbau einer neuen Verbindung zwischen dem Sender und dem die Fehlerinformation sendenden Empfänger fehlgeschlagen ist;
- Rücksendung der Erfolgsinformation, um den Nutzer darüber zu informieren, dass der Empfänger erfolgreich wiederhergestellt worden ist, wenn die neue Verbindung zwischen dem Sender und dem Empfänger erfolgreich aufgebaut ist.

7. Verfahren gemäß Anspruch 5, **dadurch gekennzeichnet, dass** wenn der Schritt der Routensuche der Punkt-zu-Punkt-Verbindung zwischen dem Sender und einem der Empfänger, der den Service vom Sender aufgrund eines Fehlers der Originalverbindung nicht empfangen kann, fehlgeschlagen ist, Aussenden seitens des Routenkontrollers der Fehlerinformation an den Verbindungskontroller im Portal der Netzwerkgrenze, und außerdem Rücksendung der Fehlerinformation, um den Nutzer darüber zu informieren, dass der Empfänger des betreffenden Services den Service nicht normal über den Verbindungskontroller im Portal der Netzwerkgrenze empfangen kann.

8. Verfahren gemäß einem der Ansprüche 4, 5, 6 und 7, **dadurch gekennzeichnet, dass** das Verfahren das Löschen der neuen Punkt-zu-Punkt-Verbindung zwischen dem Sender und dem Empfänger, der den Service vom Sender aufgrund eines Fehlers der Originalverbindung nicht empfangen kann, umfasst, sowie die Rücksendung - durch den Verbindungskontroller im Portal der Netzwerkgrenze - des Multicast-Services zur Original-Multicast-Verbindung, sobald der Empfängerfehler eliminiert ist.

9. Verfahren gemäß Anspruch 8, **dadurch gekennzeichnet, dass** der Schritt des Löschens der neuen Punkt-zu-Punkt-Verbindung und der Rücksendung des Multicast-Services zur Original-Multicast-Verbindung folgendes umfasst:
- Erfassung der Benachrichtigung, die angibt, dass der Fehler von allen Multicast-Service-Empfängern vom Verbindungskontroller im Portal der Netzwerkgrenze eliminiert worden ist;
- Ortung der entsprechenden Retablierungsverbindung gemäß den von Sender und Empfänger gesendeten Benachrichtigungen, die angeben, dass der Fehler seitens des Verbindungskontroller im Portal der Netzwerkgrenze eliminiert wird;
- Löschen der Retablierungsverbindung.

10. Verfahren gemäß Anspruch 9, **dadurch gekennzeichnet, dass** sie darüber hinaus noch folgendes umfasst:
- Überprüfung des Fortschritts des Löschens der Retablierungsverbindung seitens des Verbindungskontrollers im Portal der Netzwerkgrenze;
- Rücksendung, seitens des Verbindungskontrollers im Portal der Netzwerkgrenze, der Benachrichtigung zur Information des Nutzers, dass die Rückkehr des entsprechenden Multicast-Service-Empfängers fehlgeschlagen ist, wenn die Löschfunktion fehlgeschlagen ist, und andernfalls, dass der Multicast-Service wieder zur Original-Multicast-Verbindung zurückgekehrt ist.

11. Verfahren gemäß Anspruch 9, **dadurch gekennzeichnet, dass** im Schritt der Ortung der entsprechenden Retablierungsverbindung außerdem noch folgendes umfasst:
- Start einer Zeitverzögerung für die Retablierung nach der Ortung der entsprechenden Retablierungsverbindung, wobei der Schritt der Erfassung der Benachrichtigung, welche angibt, dass der zu eliminierende Fehler von allen Multicast-Service-Empfängern umgesetzt ist, wenn der Verbindungskontroller im Portal der Netzwerkgrenze wieder innerhalb der zugestandenen Zeit der Zeitverzögerung eine Fehlerbenachrichtigung seitens des Service-Empfängers empfängt, andernfalls wird der Schritt zum Start des Löschprozesses der Retablierungsverbindung umgesetzt.

## Revendications

1. Procédé de protection et de rétablissement de connexion d'un service multidiffusion dans un réseau optique à commutation automatique, le procédé comprenant les étapes suivantes :
diviser la connexion d'un service multidiffusion de point à point en une pluralité de nouvelles connexions de point à point entre l'expéditeur et de multiples récepteurs selon une structure de trame du réseau optique à commutation automatique et
mettre en oeuvre une opération de protection et de rétablissement de la connexion de service multidiffusion dans le réseau optique à commutation automatique selon ladite connexion de point à point, **caractérisé en ce que** la mise en oeuvre de l'opération de protection de la connexion de service multidiffusion dans le réseau optique à commutation automatique comprend les opérations suivantes :
détecter une demande d'établissement d'une protection de redondance pour un service multidiffusion envoyée par un utilisateur à l'aide du dispositif de commande de connexion dans le portail de la limite de réseau ;
interroger un expéditeur, tous les récepteurs et une route de connexion de service multidiffusion en cours selon la demande d'établissement d'un protection de redondance pour un service multidiffusion à l'aide du dispositif de commande de connexion, créer une demande d'interrogation de route pour établir une nouvelle connexion multidiffusion selon le résultat de l'interrogation de l'expéditeur, de tous les récepteurs et d'une route de connexion du service multidiffusion en cours et une politique de rétablissement et envoyer la demande d'interrogation de route au dispositif de commande de routage afin d'établir la nouvelle connexion multidiffusion, dans lequel un type de service de la demande d'interrogation de route pour établir la nouvelle connexion multidiffusion est identifié comme un type multidiffusion ;
obtenir un résultat de routage en interrogeant une base de données de routage selon la demande d'interrogation de route afin d'établir une nouvelle connexion multidiffusion à l'aide du dispositif de commande de routage et renvoyer le résultat de routage au dispositif de commande de connexion dans le portail de la limite de réseau et
établir respectivement des connexions de point à point entre l'expéditeur et chacun des récepteurs selon le résultat de l'interrogation de routage à l'aide du dispositif de commande de connexion dans le portail de la limite de réseau, dans lequel les connexions de point à point se distinguent d'une connexion de point à point ordinaire en ajoutant une propriété de multidiffusion.

2. Procédé selon la revendication 1, **caractérisé en ce que** la mise en oeuvre d'une opération de protection de la connexion de service multidiffusion dans le réseau optique à commutation automatique comprend en outre les opérations suivantes :
contrôler la progression de l'établissement des connexions de point à point à l'aide du dispositif de commande de protection dans le portail de la limite de réseau ;
renvoyer des informations d'échec à l'utilisateur et supprimer toutes les connexions de point à point créées et passer à l'étape de détection d'une demande d'établissement d'une protection de redondance pour un service multidiffusion en provenance d'un utilisateur si l'établissement de l'une quelconque des connexions de point à point a échoué, et
renvoyer des informations de réussite à l'utilisateur si toutes les connexions de point à point sont établies avec succès.

3. Procédé selon la revendication 2, **caractérisé en ce que** l'étape de mise en oeuvre d'une opération de protection de la connexion de service multidiffusion dans le réseau optique à commutation automatique comprend en outre les opérations suivantes :
renvoyer une information d'échec au dispositif de commande de connexion dans le portail de la limite de réseau si l'étape d'obtention du résultat de routage auprès du dispositif de commande de routage en interrogeant une base de données de routage selon une demande d'interrogation de routage pour établir un nouvelle connexion multidiffusion échoue ; et
renvoyer l'information d'échec à l'utilisateur à l'aide du dispositif de commande de connexion.

4. Procédé selon la revendication 1, **caractérisé en ce que** l'étape de mise en oeuvre d'une opération de rétablissement de connexion de service multidiffusion dans le réseau optique à commutation automatique comprend l'opération consistant à établir respectivement une connexion de point à point entre l'expéditeur et au moins un récepteur qui ne peut pas recevoir un service en provenance de l'expéditeur pour l'échec de connexion originale à l'aide du dispositif de commande de connexion dans le portail de la limite de réseau de manière à rétablir le service interrompu.

5. Procédé selon la revendication 4, **caractérisé en ce que** l'étape de mise en oeuvre d'une opération de rétablissement de connexion du service multidiffusion dans le réseau optique à commutation automatique comprend en outre les opérations suivantes :
détecter une notification d'échec en provenance de tous les récepteurs de service du service multidiffusion à l'aide du dispositif de commande de connexion dans le portail de la limite de réseau ;
créer la demande d'interrogation de route par rapport à l'expéditeur et au récepteur en envoyant la notification d'échec à l'aide du dispositif de commande de connexion dans le portail de la limite de réseau en utilisant la notification d'échec et la politique de rétablissement, et envoyer le demande d'interrogation de route au dispositif de commande de routage ;
rechercher une route d'une connexion de point à point entre l'expéditeur et l'un des récepteurs du service à l'aide du dispositif de commande de routage en interrogeant la base de données de routage selon la demande d'interrogation de route et
établir une nouvelle connexion entre l'expéditeur et le récepteur qui ne peut pas recevoir un service en provenance de l'expéditeur pour l'échec de connexion originale selon la route recherchée de la connexion de point à point à l'aide du dispositif de commande de connexion dans le portail de la limite de réseau.

6. Procédé selon la revendication 5, **caractérisé en ce que** le procédé comprend en outre les étapes suivantes :
vérifier la progression de l'établissement de la nouvelle connexion entre l'expéditeur et le récepteur qui ne peut pas recevoir un service en provenance de l'expéditeur pour l'échec de connexion originale à l'aide du dispositif de commande de connexion dans le portail de la limite de réseau ;
renvoyer une information d'échec afin d'informer l'utilisateur que le récepteur associé du service multidiffusion ne peut pas recevoir un service normalement si l'établissement de la nouvelle connexion entre l'expéditeur et ledit récepteur en envoyant la notification d'échec a échoué ; et
renvoyer une information de réussite afin d'informer l'utilisateur que ledit récepteur a récupéré avec succès si la nouvelle connexion entre l'expéditeur et ledit récepteur est établie avec succès.

7. Procédé selon la revendication 5, **caractérisé en ce que**, si l'étape de recherche de la route de la connexion de point à point entre l'expéditeur et l'un des récepteurs qui ne peut pas recevoir un service en provenance de l'expéditeur pour l'échec de connexion originale a échoué, envoyer l'information d'échec au dispositif de commande de connexion dans le portail de la limite de réseau à l'aide du dispositif de commande de routage et renvoyer en outre l'information d'échec afin d'informer l'utilisateur que le récepteur du service associé ne peut pas recevoir un service normalement à l'aide du dispositif de commande de connexion dans le portail de la limite de réseau.

8. Procédé selon l'une quelconque des revendications 4, 5 6 et 7, **caractérisé en ce que** le procédé comprend la suppression de la nouvelle connexion de point à point entre l'expéditeur et le récepteur qui ne peut pas recevoir un service en provenance de l'expéditeur pour l'échec de la connexion originale, et le renvoi du service multidiffusion à la connexion multidiffusion originale à l'aide du dispositif de commande de connexion dans le portail de la limite de réseau après que l'échec du récepteur a été éliminé.

9. Procédé selon la revendication 8, **caractérisé en ce que** l'étape de suppression de la nouvelle connexion de point à point et de renvoi du service multidiffusion à la connexion multidiffusion originale comprend les étapes suivantes :
détecter une notification qui indique que l'échec a été éliminé de tous les récepteurs de service multidiffusion à l'aide du dispositif de commande de connexion dans le portail de la limite de réseau ;
localiser la connexion de rétablissement associée selon l'expéditeur et le récepteur en envoyant la notification qui indique que le défaut a été éliminé à l'aide du dispositif de commande de connexion dans le portail de la limite de réseau et
supprimer la connexion de rétablissement.

10. Procédé selon la revendication 9, **caractérisé en ce qu'**il comprend en outre les étapes suivantes :
vérifier la progression de la suppression de la connexion de rétablissement à l'aide du dispositif de commande de connexion dans le portail de la limite de réseau et
le dispositif de commande de connexion dans le portail de la limite de réseau renvoie une information pour informer l'utilisateur que le renvoi par le récepteur de service multidiffusion associé a échoué si l'opération de suppression a échoué, autrement, le service multidiffusion est renvoyé à la connexion multidiffusion originale.

11. Procédé selon la revendication 9, **caractérisé en ce que** l'étape de localisation de la connexion de rétablissement associée comprend en outre le démarrage d'une minuterie de temporisation pour un rétablissement après la localisation de la connexion de rétablissement associée, dans lequel l'étape de détection d'une notification qui indique que l'échec a été éliminé de tous les récepteurs de service multidiffusion est mise en oeuvre si le dispositif de commande de connexion dans le portail de la limite de réseau reçoit une notification d'échec en provenance du récepteur de service à nouveau à l'intérieur d'une période de temporisation de la minuterie, autrement, l'étape de démarrage du procédé de suppression de la connexion de rétablissement est mise en oeuvre.
